## Europäisches Patentamt

## European Patent Office

## Office européen des brevets

(19)

(11) Publication number: **0 007 841**
**B1**

(12)

# EUROPEAN PATENT SPECIFICATION

(45) Date of publication of patent specification: **07.09.83**

(51) Int. Cl.³: **B 60 C 9/20**

(21) Application number: **79400471.3**

(22) Date of filing: **06.07.79**

(54) Pneumatic tire with reinforcing belt.

(30) Priority: **07.07.78 FR 7820330**

(43) Date of publication of application:
**06.02.80 Bulletin 80/3**

(45) Publication of the grant of the patent:
**07.09.83 Bulletin 83/36**

(84) Designated Contracting States:
**AT BE CH DE GB IT LU NL**

(56) References cited:
**FR - A - 1 228 241**
**FR - A - 2 086 059**
**FR - A - 2 235 810**
**FR - A - 2 316 091**
**FR - A - 2 338 811**
**FR - A - 2 338 813**
**US - A - 4 034 791**

(73) Proprietor: **PNEU UNIROYALENGLEBERT**
**F-60200 Clairoix (FR)**

(72) Inventor: **Mirtain, Henri Jean**
**35, avenue de la Somme**
**F-60200 Compiegne (FR)**

(74) Representative: **Weinstein, Zinovi et al,**
**Cabinet Z. WEINSTEIN 31, Cuvillierstrasse**
**D-8000 München 80 (DE)**

Courier Press, Leamington Spa, England

## Pneumatic tire with reinforcing belt

This invention relates to an improved pneumatic tire comprising a carcass with a crown portion, a tread and a reinforcement belt between the crown portion of the carcass and the tread, said reinforcement belt being symmetrical with respect to the equatorial plane of the tire and consisting of two unfolded plies of differing crosswise widths, arranged in mutually radially overlying relationship and made from rubber-coated cord layers, the wider unfolded ply extending over the tread width, and of two edge strips provided at the crosswise opposite side edges of said unfolded plies, respectively, and folded each one to form a pair of long and short flap portions directed towards the equatorial plane of the tire, each pair of crosswise spaced, opposite, confronting, homologous edge strip flap portions being aligned with each other, whereas the narrower unfolded ply lies between and is substantially aligned with two corresponding confronting, homologous edge strip flap portions which form endwise terminal extensions of the side edges of said narrower unfolded ply and overlap the side edges of said wider unfolded ply, whereby the belt has at least two and at most three locally superpositioned layers of ply thickness at any point along its crosswise extent, the cords of said unfolded plies being made from metallic material and the cords of said folded edge strips being made from a non-metallic material.

A tire reinforcing belt or breaker structure of the general kind referred to hereinabove is disclosed by applicant's prior U.S. patent n° 4,034,791 issued on July 12th, 1977 and according to which the wider unfolded ply may be broader than the tread width whereas those two opposite confronting edge strip flap portions which are aligned with the wider unfolded ply, form substantially contiguous terminal extensions thereof whereas the non-metallic material may be a textile material such as a synthetic substance on an aromatic polyamide base designated under the trade name KEVLAR.

This known construction exhibits in particular the following drawbacks:

— some undesirable hinge effect is still experienced at the junctions between the folded edge strips and the unfolded plies;

— the tire shoulder portions are particularly soft and yielding and since the edge strips are not folded about the side edges of the wider unfolded ply extending over or beyond the tread width, said side edges thereof are likely to separate from the tread during high speed motion of the tire, thereby resulting in untimely tire failure.

Moreover it is stated as an advantage in said prior publication that no ply surrounds another ply and that the plies of metallic material are not inserted between confronting folded portions of the plies of non-metallic material and that said known construction is mainly aiming at achieving a low belt mass or light-weight in the marginal edge portions of the belt.

From the prior publication n° FR—A— 2,086,059 of the French patent application n° 71.13 118 issued on December 31st 1971 (hence older than said U.S. patent) is known a tire belt or breaker structure which is symmetrical with respect to the equatorial plane of the tire and differs from the construction disclosed in said younger U.S. patent in particular in the following respects:

— it is made throughout from the same material;

— the folded edge strips are straddling the side edges of the wider unfolded ply by being each one bent over the adjacent side edge thereof;

— the narrower unfolded ply lying between and substantially aligned with two corresponding confronting opposite homologous edge strip flap portions is crosswise spaced endwise therefrom by rather large gaps.

This known construction suffers from the following inconveniences adversely affecting the behaviour of the tire in use:

— it is stated to provide a dynamic flexibility to the belt in its crosswise extending central portion;

— said gaps result in corresponding weak spots in the belt giving thus rise to local hinge effects, respectively.

It appears therefore that the teachings of the younger U.S. patent n° 4,034,791 follows substantially the opposite way with respect to said older French patent application publication.

Still another prior art tire belt or breaker construction is known from the publication n° FR—A—2,338,811 of the French patent application n° 77.02 124 issued on August 19th, 1977 and is made from a textile structure or also from a structure comprising metal wires, glass fiber threads or other mineral materials. The crown exhibits at least two areas of reduced flexural stiffness with respect to the crown portions adjacent to said areas on either side thereof and such areas are provided by suitably changing the bending rigidity of the belt construction because a change in the flexural stiffness of the elastomeric part of the crown would involve the use in particular of differing materials thereby resulting in manufacturing difficulties and operating drawbacks.

In this known construction, the belt is made throughout from one and the same material and the areas of reduced bending rigidity are provided either by means of local partial or full gap-like interruptions or discontinuities through local lack of material in the belt thereby providing an imperfect hinge effect hence a discrete reduction in flexural stiffness therein at such gaps or by means of variations in the relative arrangements of the plies or in the components (such as type and number of cords used or kind of cord interlacing) thereof. In a typical embodiment of said known construction the belt comprises at least two like overlying longer unfolded plies which are wider than the tread and have their side edges straddled by folded-over edge strips forming each one a pair of long and short flap portions, and at least two like overlying shorter unfolded plies superpositioned radially outwards to said longer unfolded plies, one radially inner shorter unfolded ply being crosswise aligned with the crosswise spaced from two corresponding confronting edge strip flap portions thus leaving rather large gaps therebetween in symmetrical relation to the equatorial plane. This known construction is disadvantageous because the crown areas at these gaps where the belt thickness hence the bending rigidity are locally reduced (because material is missing) behave as hinged connections which proves to be detrimental to the expected operating qualities of the tire.

With reference to the aforesaid two prior French patent application publications wherein the belt and in particular the belt cords are made throughout from one and a same material it should be pointed out that if the belt cords are made throughout from metal the belt is too stiff or rigid whereas if the belt cords are made throughout from synthetic or plastics material the belt is too expensive.

Starting from the generic kind of construction of the annular reinforcement belt surrounding a carcass intermediate of the carcass and the tread of the tire as defined at the outset previously herein, the object of the invention is to improve that construction while retaining a light structural weight and low manufacturing costs by strengthening and protecting the belt edges by means of said folded edge strips in such a manner that belt edge separations are substantially fully prevented and that the overall stiffness of the belt edge portions is lower than the crosswise rigidity of the central belt portion while avoiding any hinge effect throughout the belt width. This problem is solved according to the invention by the fact that the folded edge strips are made from a substantially more flexible material than the unfolded plies and said folded edge strips are straddling or bent over the side edges of said wider unfolded ply, respectively, so that said side edges are located between the radially inner and outer superpositioned flap portions of said folded-over edge strips.

The belt according to the invention provides an optimum amount of transverse rigidity in the middle area thereby imparting adequate stability and strength to the tire crown portion whereby peripheral, radial and side or cornering forces may be well and reliably taken up by such a belt in operation of the tire while allowing to accomplish the object of the invention stated hereinabove. Such a belt also provides an optimum amount of flexibility in the lateral areas of the belt thereby improving the overall adaptability of the belt in the tire shoulder portions; this results in a favourable road or rolling resistance of the tire and accordingly in a corresponding decrease in fuel consumption.

As already stated hereinabove the cords of said unfolded plies are made from metallic material and the cords of said folded edge strips are made from a non-metallic material. As known per se said non-metallic material preferably is an aromatic polyamide or so-called aramide such as that known under the trademark KEVLAR and according to another characterizing feature of the invention, said metallic material is steel. Alternatively and according to a still further characterizing feature of the invention, said metallic material is steel and said non-metallic material is a textile material of fiber glass.

As used herein the term "cords" should be understood as relating the filiform elements such as cables, strands, filaments and monofilaments.

Thus in any embodiment of the invention, the reinforcement belt in cross section comprises two crosswise spaced, opposite sidewise arranged plies each one of which is folded over to form a pair of superposed flap portions having ends directed towards the equatorial plane of the tire and homologous ends of the flap portions are aligned and have respective predetermined crosswise spacings therebetween. Such folded-over edge strips surround the side edge portions of only one in particular the wider of the unfolded plies and the cords or like filiform elements of the folded-over edge strips are substantially more flexible than those of the unfolded plies.

In at least one embodiment of the invention, the narrower unfolded ply is positioned radially beyond or outwards of the wider unfolded ply, with respect to the axis of rotation of the tire.

In other embodiments of the invention, the narrower unfolded ply is located radially inwards of the wider unfolded ply.

The crosswise aligned flap portions of the folded-over edge strips which form terminal extensions of the narrower ply may be of greater or lesser crosswise extent that the aligned flap portions which are bent over the wider unfolded ply.

In the accompanying drawings in which various embodiments of the invention are illustrated:

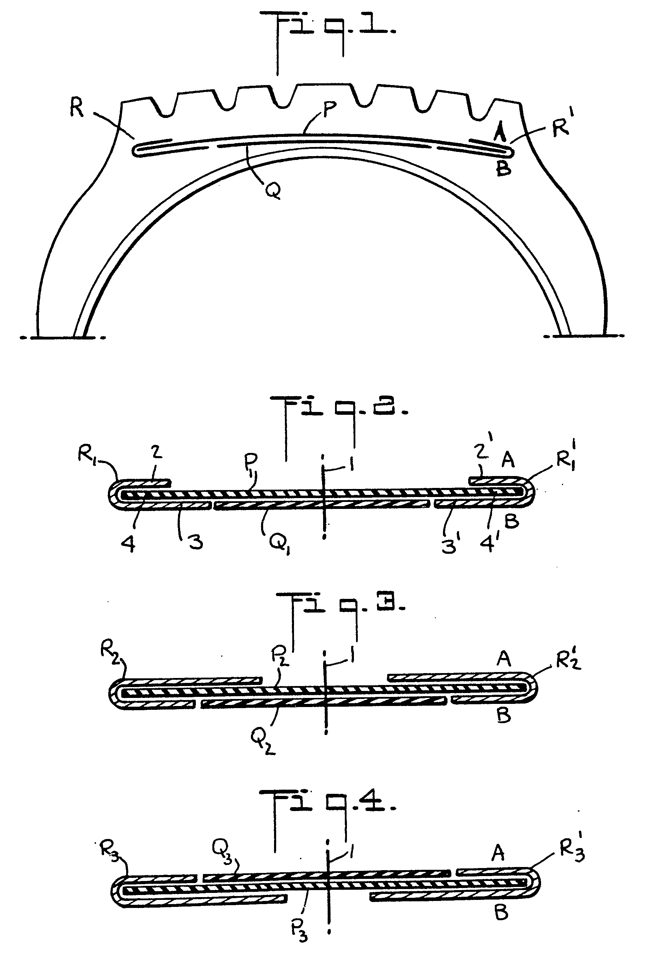

Figure 1 is a simplified schematic fragmentary cross sectional view of a pneumatic tire incorporating one embodiment of the present invention; and Figure 1—4 are simplified schematic representations of reinforcement belt constructions incorporating further embodiments of the present invention, the belt construction being disassociated from the tire environment for purposes of clarity.

Referring to Figures 1—4, the letter A designates the radially external side of the reinforcement belt with respect to the axis of rotation of the tire and the letter B designates its radially internal side. Reference number 1 represents the equatorial plane of the tire and the reinforcement belt.

In Figure 1—4, the letter P generally designates an unfolded ply of relatively large width extending over substantially the entire width of the reinforcement belt. The letter Q designates an unfolded ply of relatively lesser width than the unfolded ply P. The unfolded plies P and Q are formed of rubber coated metallic filiform elements, selected to impart a desired predetermined crosswise rigidity to the reinforcement belt. The letters R and R' in Figures 2—4 respectively designate the folded over plies in the lateral areas of the reinforcement belt. The plies R and R' are formed of rubber coated filiform reinforcement elements having substantially greater flexibility than the filiform elements of the unfolded plies. Any type of sufficiently flexible filiform elements can be used such as formed of metal, preferably steel, or a natural or artificial textile material, fiberglass, or an aromatic polyamide or aramide such as the type of material designated by the trademark KEVLAR.

In the Figure 2 embodiment the relatively narrow unfolded ply $Q_1$ forms an extension of radially internal flaps 3 and 3' respectively of the folded over plies $R_1$ and $R'_1$. The unfolded ply $Q_1$ is disposed radially internally of the relatively wide unfolded ply $P_1$ and the folded over plies $R_1$ and $R'_1$ surround the lateral areas 4 and 4' of the unfolded ply $P_1$. The radially internal flaps 3 and 3' have a greater crosswise extent than the radially external flaps 2 and 2'.

It will be noted that it is possible to select filiform reinforcement elements having substantial differences in flexibility and/or elasticity even though made of the same constituent material. For example, filiform elements made of steel can have a modulus of elasticity varying from approximately 1,000 to 20,000 kilograms per sq. mm. Thus by selecting predetermined structures of filiform elements made of steel, the unfolded plies can be made relatively rigid and the folded over plies relatively flexible. Accordingly the filiform elements of the plies $P_1$ and $Q_1$ are formed of heavy steel cable cords. Each cable cord comprises a strand of four wires having a diameter of 0.25 mm. The filiform elements of the folded over plies $R_1$ and $R'_1$ are formed of fine, flexible steel cable cords each cord comprising four strands of three wires having a diameter of 0.15 mm.

In the Figure 3 embodiment the radially internal flaps have a lesser crosswise extent than the radially external flaps. The folded over plies $R_2$ and $R'_2$ are formed of aramide filiform elements such as known under the trademark Kevlar. The filiform reinforcement elements of the unfolded plies $P_2$ and $Q_2$ are substantially the same as those of the plies $P_1$ and $Q_1$.

In the Figure 4 embodiment the unfolded ply

$Q_3$ is radially external of the unfolded ply $P_3$ and forms an extension of the radially external flaps. The filiform reinforcement elements of the unfolded plies $P_3$ and $Q_3$ are substantially the same as those of Figures 2—3 whereas the filiform reinforcement elements of the folded-over plies $R_3$ and $R'_3$ can be made of KEVLAR material as described for the Figure 2 embodiment.

The belt construction according to the invention results in a reduction in manufacturing costs with respect to prior art structures because the relatively heavy steel cable cords forming the reinforcement of in particular the narrower unfolded ply such as $Q$, $Q_1$, $Q_2$, $Q_3$ are of substantially lesser extent and substantially less expensive than the relatively flexible fine steel cable cords used in prior art wider unfolded plies.

## Claims

1. Pneumatic tire comprising a carcass with a crown portion, a tread and a reinforcement belt between the crown portion of the carcass and the tread, said reinforcement belt being symmetrical with respect to the equatorial plane of the tire and consisting of two unfolded plies (P, Q) of differing crosswise widths, arranged in mutually radially overlying relationship and made from rubber-coated cord layers, the wider unfolded ply (P) extending over the tread width, and of two edge strips (R, R') provided at the crosswise opposite side edges of said unfolded plies, respectively, and folded each one to form a pair of long and short flap portions directed towards the equatorial plane of the tire, each pair of the crosswise spaced, opposite, confronting, homologous edge strip flap portions being aligned with each other, whereas the narrower unfolded ply (Q) lies between and is substantially aligned with two corresponding confronting homologous edge strip flap portions (2, 3; 2', 3') which form endwise terminal extensions of the side edges of said narrower unfolded ply and overlap the side edges of said wider unfolded ply, whereby the belt has at least two and at most three locally superpositioned layers of ply thickness at any point along its crosswise extent, the cords of said unfolded plies (P, Q) being made from metallic material and the cords of said folded edge strips (R, R') being made from a non-metallic material, characterized in that the folded edge strips (R, R') are made from a substantially more flexible material than the unfolded plies (P, Q) and said folded edge strips (R, R') are straddling or bent over the side edges (4, 4') of said wider unfolded ply (P), respectively, so that said side edges (4, 4') are located between the radially inner and outer superpositioned flap portions (2, 3; 2', 3') of said folded-over edge strips (R, R').

2. Pneumatic tire according to claim 1, wherein said non-metallic material is an aromatic polyamide or so-called aramide such as that known under the trademark KEVLAR, characterized in that said metallic material is steel.

3. Pneumatic tire according to claim 1, characterized in that said metallic material is steel and said non-metallic material is a textile material or fiber glass.

## Revendications

1. Enveloppe de bandage pneumatique comprenant une carcasse avec une partie de couronne, une bande de roulement et une ceinture de renforcement entre la partie de couronne de la carcasse et la bande de roulement, ladite ceinture de renforcement étant symétrique par rapport au plan équatorial de l'enveloppe de bandage pneumatique et consistant en deux nappes non pliées (P, Q) ayant des largeurs transversales différentes, agencées en relation se recouvrant mutuellement radialement et faites de couches de cordes enrobées de caoutchouc, la nappe plus large non pliée (P) s'étendant sur la largeur de la bande de roulement, et en deux bandes de bordure (R, R') prévues sur les bordures latérales transversalement opposées desdites nappes non pliées respectivement, et chacune étant repliée pour former une paire de parties de volet longue et courte dirigées vers le plan équatorial de l'enveloppe de bandage pneumatique, chaque paire de parties de volet de bande de bordure transversalement espacée, face à face et en via-à-vis et homologue, étant alignée avec l'autre, tandis que la nappe non pliée plus étroite (Q) se trouve entre et sensiblement alignée avec deux parties de volet de bande de bordure homologue et face à a face (2, 3; 2', 3') qui forment des extensions terminales extrêmes des bordures latérales dudit pli plus étroit non plié et chevauchent les bordures latérales dudit pli plus large non plié, ainsi la ceinture a au moins deux et au plus trois couches localement superposées d'épaisseur de nappe, en tout point le long de son étandue transversale, les cordes desdites nappes non pliées (P, Q) étant faites en un matériau métallique et les cordes desdites bandes de bordure pliées (R, R') étant faites en un matériau non métallique, caractérisée en ce que les bandes de bordure pliées (R, R') sont faites en un matériau sensiblement plus flexible que les nappes non pliées (P, Q) et lesdites bandes de bordure pliées (R, R') chevauchent ou sont recourbées au-dessus des bordures latérales (4, 4') de ladite nappe plus large non pliée (P) respectivement, ainsi lesdites bordures latérales (4, 4') sont placées entre les parties de volet superposées radialement interne et externe (2, 3; 2', 3') desdites bandes de bordure repliées (R, R').

2. Enveloppe de bandage pneumatique selon la revendication 1, où ledit matériau non-métallique est un polyamide aromatique ou appelé aramide tel que ce-lui connu sous la dénomination commerciale KEVLAR, caractérisée en ce que ledit matériau métallique est de l'acier.

3. Enveloppe de bandage pneumatique selon la revendication 1, caractérisée en ce que ledit matériau métallique est de l'acier et ledit matériau non-métallique est un matériau textile ou de la fibre de verre.

## Patentansprüche

1. Luftreifen mit einer Karkasse mit einem Kronenteil, einer Lauffläche und einem zwischen dem Kronenteil der Karkasse und der Lauffläche liegenden Verstärkungsgürtel, wobei dieser Verstärkungsgürtel symmetrisch zu der Äquatorebene des Reifens ist und aus zwei zueinander radial übereinander angeordnete, aus mit Gummi überzogenen Kordschichten hergestellten ungefalteten Lagen (P, Q) mit unterschiedlichen Querbreiten, wobei die breitere ungefaltete Lage (P) sich über die Laufflächenbreite erstreckt, und aus zwei jeweills an den in Querrichtung entgegengesetzten Seitenrändern der ungefalteten Lagen) vorgesehenen Randstreifen (R, R') besteht, von welchen jeder zusammengefaltet ist, um ein Paar von jeweils einem langen und einem kurzen zu der Reifen-äquatorebene hin gerichten Umschlagteil zu bilden, wobei jedes Paar in Querrichtung in Abstand voneinander angeordneten, entgegengesetzten, gegenüberliegenden, homologer Randstreifenumschlagteile miteinander fluchtend ausgerichtet sind, während die schmalere ungefaltete Lage (Q) zwischen denjenigen zwei entsprechenden gegenüberliegenden homologen Randstreifenumschlagteilen (2, 3; 2', 3') liegt und mit diesen im wesentlichen fluchtend ausgerichtet ist, welche Endverlängerungen der Seitenränder dieser Schmaleren ungefalteten Lage bilden und die Seitenränder der breiteren ungefalteten Lage überlappen, wodurch der Gürtel wenigstens zwei und höchstens drei örtlich übereinander angeordnete, die Lagendicke aufweisende Schichten an jeder Stelle entlang seiner Querausdehnung aufweist, wobei die Korde der ungefalteten Lagen (P, Q) aus metallischem Werkstoff und die Korde der gefalteten Randstreifen (R, R') aus nicht metallischem Werkstoff hergestellt sind, dadurch gekennzeichnet, dass die umgefalteten Randstreifen (R, R') aus im wesentlichen biegsameren Werkstoff als die ungefalteten Lagen (P, Q) gefertigt sind und die umgefalteten Randstreifen (R, R') jeweils rittlings über die Seitenränder (4, 4') der breiteren, ungefalteten Lage (P) angeordnet bzw. un diese umgebogen sind, so dass diese Seitenränder (4, 4') zwischen den jeweils radial inneren und äusseren übereinander angeordneten Umschlagteilen (2, 3; 2', 3') der umgefalteten Seitenstreifen (R, R') liegen.

2. Luftreifen nach Anspruch 1, bei welchem der nicht metallische Werkstoff ein aromatisches Polyamid bzw. sogenanntes Aramid ist, wie dasjenige, das unter dem Warenzeichen KEVLAR bekannt ist, dadurch gekennzeichnet, dass der metallische Werkstoffe Stahl ist.

3. Luftreifen nach Anspruch 1, dadurch gekennzeichnet, dass der metallische Werkstoff Stahl und der nicht metallische Werkstoff ein Textilwerkstoff oder Glasfaser ist.

**0 007 841**

Fig.1.

Fig.2.

Fig.3.

Fig.4.

1